# FASCICULE DE BREVET EUROPEEN

(11) **EP 2 164 916 B1**
(45) Date de publication et mention de la délivrance du brevet: **31.07.2013**
(21) Numéro de dépôt: 08826715.8
(22) Date de dépôt: 26.06.2008
(51) Int. Cl.: C09J 7/02, C09J 153/02, C09J 193/04, B32B 27/08, G09F 3/04, C08K 5/09

(54) **HMPSA POUR ETIQUETTE AUTO-ADHESIVE DECOLLABLE**
SCHMELZHAFTKLEBER FÜR ABLÖSBARE SELBSTKLEBENDE ETIKETTEN
HMPSA FOR REMOVABLE SELF-ADHESIVE LABEL

(30) Priorité: 29.06.2007 FR 0704678
(43) Date de publication de la demande: 24.03.2010
(73) Titulaire: BOSTIK SA, 92400 Courbevoie (FR)
(72) Inventeur: FOUQUAY, Stéphane, André, F-76130 Mont Saint Aignan (FR); GOUBARD, David, F-60200 Compiegne (FR)
(74) Mandataire: Granet, Pierre
(86) Numéro de dépôt international: PCT/FR2008/000901
(87) Numéro de publication internationale: WO 2009/016285

(56) Documents cités:
- EP-A- 0 150 218
- WO-A-99/13016
- US-A- 3 950 291
- US-A- 4 728 572
- US-A- 5 389 711

## Description

La présente invention a pour objet une composition adhésive thermofusible sensible à la pression convenant au collage d'étiquettes auto-adhésives qui sont décollables durant un procédé de recyclage des articles auxquels elles ont été fixées (tels que des emballages et/ou récipients, par exemple des bouteilles de verre). Elle concerne également un système multicouche comprenant une couche constituée de ladite composition, une étiquette auto-adhésive, l'article étiqueté correspondant, ainsi qu'un procédé de recyclage dudit article comprenant une étape de décollement de l'étiquette.

Bien des emballages et/ou récipients étiquetés sont soumis, après élimination de leur contenu, à des traitements de nettoyage (ou de recyclage) soit en vue de leur réutilisation, soit, après destruction, en vue de la récupération du matériau qui les constitue. De tels traitements nécessitent souvent de séparer complètement l'étiquette de l'article auquel elle est fixée, sans laisser de résidus d'adhésif à la surface de ce dernier, de manière à faciliter le procédé de recyclage.

Ces procédés de recyclage, tel celui mis en oeuvre pour le nettoyage des bouteilles de verre usagées, par exemple des bouteilles de bière, comprennent généralement une étape d'immersion de l'article à nettoyer dans des compositions aqueuses basiques maintenues à des températures comprises entre 60 et 100°C. Une telle étape a également pour but le décollement et la séparation de l'étiquette fixée sur l'article.

Les adhésifs sensibles à la pression (également dénommés colles auto-adhésives ou encore, en anglais, "Pressure Sensitive Adhesives" ou PSA) sont des substances conférant au support qui en est revêtu un pouvoir collant immédiat à température ambiante (souvent désigné sous le terme de "tack"), lequel permet son adhésion instantanée à un substrat sous l'effet d'une pression légère et brève. Les PSA sont largement utilisés pour la fabrication d'étiquettes auto-adhésives qui sont fixées sur des articles à des fins de présentation d'informations (telles que code barre, dénomination, prix) et/ou à des fins décoratives.

Les PSA sont généralement appliqués par des procédés d'enduction en continu sur la totalité de la surface d'une couche support imprimable de grandes dimensions constituée de papier ou de film d'un matériau polymère à une ou plusieurs couches. La couche d'adhésif qui recouvre la couche support imprimable (généralement la face opposée à la face imprimable) est elle-même recouverte d'une couche protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ce système multicouche peut être ultérieurement converti en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche protectrice peut être facilement enlevée sans modification de la couche d'adhésif qui reste fixée sur la couche support imprimable. Après séparation de sa couche protectrice, l'étiquette est appliquée à une température proche de la température ambiante sur l'article à revêtir soit manuellement, soit à l'aide d' étiqueteuses sur des chaînes automatisées de conditionnement.

Les PSA permettent, en raison de leur tack élevé à température ambiante, une prise ou accroche rapide de l'étiquette sur l'article à revêtir (par exemple des bouteilles), propre à l'obtention de cadences de production industrielle importantes.

Le brevet US3763117 décrit un PSA à base d'acrylate avec de bonnes propriétés adhésives qui permet une séparation facile à chaud par une solution aqueuse basique.

Le brevet US5385965 décrit également un PSA permettant après enduction sur un support papier ou film d'un matériau polymère l'obtention d'une étiquette se détachant du substrat sous l'action d'une solution alcaline à chaud. Ce PSA se présente sous la forme d'une émulsion aqueuse d'un copolymère à base d'acrylate ou d'un copolymère de type styrène-butadiène. La teneur en extrait sec de cette émulsion ne dépasse pas 70 %, de sorte que l'enduction de ce PSA sur la couche support est compliquée par la nécessité d'une étape de séchage de l'émulsion. De plus, de tels adhésifs ont pour inconvénient de passer partiellement en solution ou en suspension dans les compositions aqueuses mises en oeuvre pour le recyclage des bouteilles étiquetées, ce qui induit pour les installations industrielles des contraintes de retraitement de ces compositions avant rejet dans l'environnement.

On connaît par le brevet US4680333 une composition adhésive thermofusible sensible à la pression comprenant un copolymère bloc styrène-isoprène-styrène, une résine aliphatique à basse température de ramollissement et un sel métallique d'un acide gras. Cette composition permet, après son enduction sur un support papier puis adhésion de ce support sur un substrat, de décoller le support ainsi fixé à tout moment, à sec et à température ambiante, sans autre traitement, conférant ainsi au support enduit un comportement d'adhésif repositionnable.

Les adhésifs thermofusibles (souvent désignés sous l'appellation anglaise de "Hot Melt adhesives" ou HM) sont des substances solides à température ambiante qui ne contiennent ni eau ni solvant. Ils sont appliqués à l'état fondu et se solidifient lors du refroidissement, formant ainsi un joint qui assure la fixation des substrats à assembler. Certains Hot Melt sont formulés de manière à conférer au support qui en est revêtu un caractère relativement dur et dénué de tack. D'autres Hot Melt assurent au support un caractère relativement mou et un tack important : ce sont des PSA qui sont largement utilisés pour la fabrication d'étiquettes auto-adhésives ; les adhésifs correspondants sont désignés par l'appellation d' "adhésifs thermofusibles sensibles à la pression" ou encore, en anglais, par celle de "Hot Melt Pressure Sensitive Adhesive" (ou HMPSA).

La composition HMPSA décrite par le brevet US4680333 ne permet pas de coller de façon permanente sur un substrat l'étiquette qui en est enduite, puisque celle-ci peut être décollée à sec à tout moment.

La demande US 2004/0220308 décrit une composition adhésive thermofusible comprenant un copolymère bloc styrénique, un diluant fonctionnel acide tel qu'un acide gras, et une résine tackifiante acide ayant un indice d'acide supérieur à 100.

La présente invention a pour buts de proposer un adhésif qui permette de coller une étiquette de façon permanente sur un article, tel qu'un emballage et/ou un récipient (par exemple des bouteilles de verre), et qui offre de plus la possibilité de décoller rapidement et complètement l'étiquette durant une étape d'immersion de l'article étiqueté dans une solution aqueuse basique à température élevée, l'adhésif restant essentiellement fixé sur l'étiquette après sa séparation.

Il a à présent été trouvé que ces buts peuvent être atteints en totalité ou en partie au moyen de la composition adhésive thermofusible sensible à la pression qui est objet de la présente invention.

L'invention concerne donc une composition adhésive thermofusible sensible à la pression (HMPSA) comprenant :
- a) de 25 à 50 % d'un ou plusieurs copolymères blocs styréniques choisis dans le groupe comprenant les SIS, les SIBS, les SEBS, les SEPS, éventuellement mélangés avec une quantité d'un copolymère bloc styrénique SBS inférieure à 50 % sur la base du poids total de copolymères blocs styréniques ;
- b) de 35 à 75 % d'une ou plusieurs résines tackifiantes compatibles ayant une température de ramollissement comprise entre 80 et 150 °C et un indice d'acide inférieur à 20 ;
- c) entre 3 et 15 % d'un ou plusieurs acides carboxyliques dont la chaîne hydrocarbonée comprend de 6 à 54 atomes de carbone.

En l'absence d'indication contraire, les pourcentages utilisés dans le présent texte pour exprimer des quantités correspondent à des pourcentages poids/poids.

La composition selon l'invention permet d'obtenir après enduction sur un support de polypropylène orienté (OPP) une adhésion permanente de ce dernier sur un substrat de verre, correspondant à un pouvoir adhésif (mesuré par le test de pelage à 180° sur verre) avantageusement compris entre 1 et 15 N/cm, de préférence entre 2 et 10 N/cm. L'adhésion du support sur le substrat de verre se maintient dans le temps, y compris en présence d'une forte humidité relative. Le support d' OPP ainsi fixé sur substrat de verre se décolle toutefois facilement et complètement durant une étape d'immersion en milieu aqueux basique, sans laisser de trace d'adhésif sur ledit substrat.

Contrairement aux PSA à base d'acrylate connus de l'art antérieur, la composition selon l'invention est un HMPSA dont la forme solide à température ambiante lui permet avantageusement d'être appliqué par enduction à l'état fondu sur la couche support imprimable de l'étiquette, sans qu'il soit nécessaire de mettre en oeuvre une étape de séchage. Préalablement à son enduction, l'HMPSA selon l'invention peut sans inconvénient être conservé à l'état fondu dans un bac (également appelé fondoir) à une température élevée, allant jusqu'à 160°C durant plusieurs heures et jusqu'à 1 ou 2 jours.

De plus, dans l'étape d'immersion, l'adhésif demeure pour l'essentiel fixé au support d'OPP après décollement de ce dernier du substrat de verre. Ainsi l'adhésif ne se dissout (ou ne se disperse) pas, ou seulement dans de très faibles proportions, dans les compositions aqueuses mises en oeuvre dans le traitement de recyclage, ce qui évite des traitements supplémentaires de dépollution des bains de lavage.

Les copolymères blocs utilisables dans l'HMPSA selon l'invention ont une masse molaire moyenne en poids Mw généralement comprise entre 60 kDa et 400 kDa et sont constitués de blocs de différents monomères polymérisés. Ils ont une configuration de tri-bloc de formule générale :

A-B-A (I)

dans laquelle :
- A représente un bloc non élastomère styrénique (ou polystyrène), et
- B représente un bloc dit élastomère qui peut être :
   - le polyisoprène : le copolymère bloc a alors pour structure :
      polystyrène-polyisoprène-polystyrène, et pour dénomination : SIS ;
   - le polyisoprène-polybutadiène : le copolymère bloc a alors pour structure polystyrène-polyisoprène-polybutadiène-polystyrène, et pour dénomination : SIBS
   - le polyisoprène hydrogéné totalement ou en partie : le copolymère bloc a alors pour structure : polystyrène-poly(éthylènepropylène)- polystyrène et pour dénomination : SEPS ;
   - le polybutadiène : le copolymère bloc a alors pour structure :
      polystyrène- polybutadiène- polystyrène, et pour dénomination : SBS
   - le polybutadiène hydrogéné totalement ou en partie : le copolymère bloc a alors pour structure: polystyrène-poly(éthylènebutylène)-polystyrène et pour dénomination : SEBS. Ce copolymère SEBS peut éventuellement avoir été modifié chimiquement avec de l'anhydride maléïque.

Ces copolymères styréniques tri-blocs peuvent être obtenus selon des procédés connus en soi et sont disponibles commercialement. Les procédés d'obtention de ces produits commerciaux conduisent également en général à la formation de quantités variables de composés di-blocs de formule A-B. Ainsi, au sens du présent texte, les termes SIS, SEBS, SEPS et SBS désignent en fait des mélanges de tri-blocs et de di-blocs. La quantité de di-blocs peut varier sans inconvénient de 0 à 90 % sur la base du poids total de copolymères styréniques. Outre la structure linéaire de formule (I), les copolymères styréniques tri-blocs utilisables dans l'HMPSA selon l'invention peuvent également présenter une structure radiale.

Il est bien entendu que le ou les copolymères blocs styréniques inclus dans L'HMPSA selon l'invention qui sont choisis dans le groupe comprenant les SIS, les SIBS, les SEBS, les SEPS peuvent appartenir à une seule ou à plusieurs de ces 4 familles de copolymères.

La quantité de bloc styrénique peut quant à elle varier dans de larges limites, comme par exemple de 15 % à 50 % (sur la base du poids total de copolymères blocs).

On peut citer comme exemples de produits commerciaux :
- de SIS linéaire : le Vector^{®} 4411 de la société ExxonMobil ayant une teneur en di-bloc de 0 % et une teneur en styrène de 44%, le Kraton^{®} D1113 de la société Kraton (56% de di-bloc et 16% de styrène), le Kraton® D1165 (25% de di-bloc et 30% de styrène) ;
- de SIS radial : le Kraton^{®} D1124 (29% di-bloc et 30% styrène), le Vector^{®} DPX 586 (80% de di-bloc et 18 % de styrène) de la société ExxonMobil ;
- de SIBS : le Kraton^{®} MD 6455 (35% de di-bloc et 18% de styrène)
- de SBS : l'Europrène^{®} Sol T 166 (10% de di-bloc et 30 % de styrène) de la société Polimeri Europa (Italie), le Stéréon^{®} 840A de la société Firestone, le Kraton^{®} D1120 (75% de di-bloc et 30% de styrène) ;
- de SEBS : le Kraton^{®} G1726 (70% de di-bloc et 30 % de styrène). Le Kraton^{®} G1924 (30 % de di-bloc et 13 % de styrène) est un SEBS greffé avec 1% d'anhydride maléïque.

Selon une variante préférée de l'HMPSA selon l'invention, la teneur en copolymère bloc styrénique peut aller de 35 à 50 %, et encore plus préférentiellement de 40 à 45 %.

Selon une autre variante également préférée, le ou les copolymères blocs styréniques compris dans l'HMPSA selon l'invention sont choisis dans le groupe comprenant les SIS, les SEBS et les SEPS, pris individuellement ou en mélange. De manière encore plus préférée l'HMPSA comprend un ou plusieurs copolymères blocs SIS.

La ou les résines tackifiantes utilisables dans l'HMPSA selon invention ont des masses molaires moyennes en poids M_{w} généralement comprises entre 200 et 5000 et sont choisies notamment parmi :
- (i) des colophanes d'origine naturelle ou chimiquement modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols comme le glycérol, le pentaérythritol ou le néopentylglycol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

On sélectionne pour inclusion dans l'HMPSA selon l'invention les résines tackifiantes qui ont une température de ramollissement comprise entre 80 et 150 °C et un indice d'acide nul ou inférieur ou égal à 20.

La température (ou point) de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d' acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

L'Indice d'Acide représente la quantité d'acide libre et est le nombre de milligrammes de potasse nécessaire pour neutraliser l'acidité de 1 gramme de résine, déterminé par potentiométrie. L'Indice d'Acide (ou IA) des résines appartenant aux familles de résines (ii) et (iv) est nul.

Les résines tackifiantes sont disponibles commercialement, et parmi celles ayant une température de ramollissement comprise entre 80 et 150 °C et un indice d'acide nul ou inférieur à 20, on peut citer par exemple dans les familles ci-dessus les produits suivants :
(i) Sylvalite^{®} RE 100S de la société Arizona Chemical (ester de collophane et de pentaérythritol ayant une température de ramollissement d'environ 100°C et un IA inférieur à 10), Dertoline^{®} G2L (température de ramollissement de 87°C et IA de 20) et Dertopoline^{®} CG (température de ramollissement de 117°C et IA de 7) de la société française DRT ;
(ii) Escorez^{®} 5600 disponible auprès de ExxonMobil Chemical qui est une résine dicyclopentadiène hydrogénée modifiée par un composé aromatique (ayant un M_{w} d'environ 980 Da et une température de ramollissement de 100°C) ; l'Escorez^{®} 5615 de structure analogue (température de ramollissement de 115°C), Escorez^{®} 5400 également de la société Exxon Chemicals (température de ramollissement de 100°C) ; Wingtack^{®} 86 de la société Cray-Valley ; Régalite^{®} R5100 de Eastman ;
(iii) Dertophène^{®} T de la société DRT (ayant une température de ramollissement de 95°C et un indice d'acide inférieur à 1) ; Sylvarez^{®} TP95 de Arizona Chemical qui est une résine terpène phénolique avec une température de ramollissement de 95°C et un M_{w} d'environ 1120 Da ;
(iv) Sylvarez^{®} ZT 105 LT de Arizona Chemical qui est un copolymère styrène/terpène avec un point de ramollissement de 105°C.

Par résine tackifiante compatible, on entend désigner une résine tackifiante qui lorsqu'elle est mélangée dans les proportions 50 %/50 % avec un copolymère bloc choisi dans le groupe comprenant les SIS, les SIBS, les SEBS et les SEPS, donne un mélange substantiellement homogène.

Les résines tackifiantes ayant une température de ramollissement comprise entre 95 et 120°C et un indice d'acide inférieur à 10 sont préférées, comme par exemple l'Escorez^{®} 5600 ou 5615, la Sylvarez^{®} ZT 105 LT ou encore la Sylvalite^{®} RE 100S.

Selon une autre variante préférée de l'invention, l'indice d'acide des résines tackifiantes est sensiblement nul.

La teneur en résine tackifiante de l'HMPSA selon l'invention est avantageusement comprise entre 40 et 55%.

Les acides carboxyliques compris dans la composition selon l'invention ont une chaîne hydrocarbonée comprenant de 6 à 54 atomes de carbone. Ces acides carboxyliques peuvent être choisis parmi :
- (α) des acides gras monocarboxyliques, saturés ou insaturés, purs ou en mélanges ;
- (β) des mélanges d' acides gras polycarboxyliques, saturés ou insaturés, de type dimère ou trimère ;
- (γ) des mélanges d'acides monocarboxyliques polycycliques, saturés ou insaturés.

Les acides gras monocarboxyliques (α) ont en général pour radical hydrocarboné une chaîne linéaire ou, éventuellement, ramifiée. Lorsqu'on utilise des acides purs, on préfère des radicaux hydrocarbonés comprenant entre 10 et 20 atomes de carbone.

L'utilisation de mélanges des acides gras monocarboxyliques (α) est avantageuse puisque ces mélanges sont issus de corps gras d'origine animale ou végétale sous la dénomination de coupes. Ces coupes sont riches en radicaux hydrocarbonés comprenant de 6 à 22 atomes de carbone. On peut citer de manière non limitative s'agissant de ces coupes :
- les acides gras oléïques, tel le RADIACID^{®} 208 disponible auprès de la société OLEON ;
- les acides gras de tournesol, de coprah (RADIACID^{®} 600), de colza (RADIACID^{®} 166), de soja (RADIACID^{®} 110 et RADIACID^{®} 121), de palme, de palmiste ou dérivés d'huile de pin (tall oil en langue anglaise) ;
- les acides gras de suif, comme les RADIACID^{®} 401 et RADIACID^{®} 403 ;
- les acides gras de suif hydrogéné comme les RADIACID^{®} 408 et RADIACID^{®} 409.

Les mélanges (β) d'acides gras polycarboxyliques sont obtenus par dimérisation de coupes d'acides gras monocarboxyliques insaturés comprenant majoritairement des radicaux hydrocarbonés à 16 et 18 atomes de carbone. Les produits correspondants sont essentiellement des dimères (comme les RADIACID^{®} 951 et RADIACID^{®} 970) ou un mélange de dimères et de trimères (comme le RADIAC1D^{®} 980).

Les mélanges d'acides monocarboxyliques polycycliques (γ) sont de préférence issus de coupes d'origine végétale riches en composés ayant de 18 à 22 atomes de carbone et comprenant 3 cycles accolés ayant chacun 6 atomes de carbone. Des exemples de tels composés sont les acides abiétique, lévopimarique, néoabiétique, déhydroabiétique, palustrique et pimarique. Les mélanges (γ) sont habituellement disponible dans le commerce sous la forme de :
- de colophane de gemme (en anglais gum rosin) extraite de la résine de pin, ou
- de colophane d'huile de pin (en anglais tall oil rosin) extraite des liqueurs noires qui sont des sous-produits de l'industrie papetière.

On peut citer comme exemples de tels produits le FORAL^{®} AX de la société Herculès qui est une collophane d'huile de pin hydrogénée, la Staybetite^{®} E de la société Eastman qui une collophane de gemme partiellement hydrogénée, le Sylvatal^{®} 20/25 de la société Arizona Chemical qui est une colophane d'huile de pin.

Les produits (α), (β) et (γ) ont un Indice d'Acide (IA) (tel que défini précédemment) compris entre 130 et 280 mg KOH/g et un Indice d'Iode compris entre 0 et 140. L'Indice d'Iode (I.I.) représente le nombre de doubles liaisons dans les radicaux hydrocarbonés, et correspond au nombre de grammes d'iode fixés par cent grammes de corps gras.

Ainsi le RADIACID^{®} 208 possède un IA compris entre 184 et 196 et un I.I. compris entre 75 et 94. Le RADIACID^{®} 970 possède un IA compris entre 188 et 198 et un I.I. inférieur à 94. Le RADIACID^{®} 980 possède un IA de 180 et un 1.1. inférieur à 94. Le RADIACID^{®} 403 possède un IA compris entre 192 et 198 et un I.I. de 42 à 51. Le RADIACRD^{®} 600 possède un IA compris entre 250 et 264 et un I.I. de 6 à 9. Le FORAL^{®} AX possède un IA compris entre 130 et 160 et un I.I. d'environ 0, la Staybelite^{®} E a un IA d'environ 162, le Sylvatal^{®} 20/25 a un IA de 188 et un I.I. d'environ 0.

Les acides carboxyliques de type (α) et (β) procurent des résultats particulièrement avantageux, et les produits de type (β) sont encore préférés en raison d'un tack amélioré pour l'HMPSA.

Une quantité de 0,1 à 2 % d'un ou plusieurs stabilisants (ou anti-oxydant) est en outre de préférence incluse dans la composition selon l'invention. Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de CIBA. Les anti-oxydants primaires peuvent être utilisés seuls ou en combinaison avec d'autres anti-oxydants tels que des phosphites comme l'Irgafos^{®} 168 également de CIBA, ou encore avec des stabilisants UV tels que des amines.

La composition selon l'invention peut également inclure jusqu'à 20 % d'un plastifiant. Ce plastifiant peut être une huile paraffinique et naphténique qui peut contenir une fraction de composés aromatiques (comme le Primol^{®} 352 de la société ESSO) ou ne pas contenir de telle fraction (comme le Nyflex 222B de la société Nynas).

La composition selon l'invention peut encore inclure une cire d'un homopolymère de polyethylène (comme l'A-C^{®} 617 de Honeywell) ou bien une cire d'un copolymère de polyéthylène et d'acétate de vinyle, ou encore des pigments, des colorants ou des charges.

La composition thermofusible auto-adhésive selon l'invention est préparée par simple mélange de ses composants à une température comprise entre 130 et 200 °C, jusqu'à obtention d'un mélange homogène. Les techniques de mélange requises sont bien connues de l'homme du métier.

La présente invention a également pour objet un système multicouche comprenant :
- une couche d'adhésif constituée de la composition adhésive thermofusible sensible à la pression selon l'invention ;
- une couche support imprimable adjacente à ladite couche d'adhésif, constituée de papier ou de film polymère à une ou plusieurs couches ;
- une couche protectrice adjacente à ladite couche d'adhésif.

On préfère utiliser comme couche support imprimable un film bi-couche OPP/PET dont la couche d'OPP est adjacente à la couche d'adhésif.

L'HMPSA selon l'invention est appliqué à l'état fondu à une température supérieure à 130°C sur la couche support imprimable à raison d'une quantité généralement comprise entre 15 et 50 g/m² pour constituer la couche d'adhésif. L'application est réalisée par des techniques d'enduction connues comme par exemple de type buse à lèvre (à une température d'environ 160 à 180°C) ou de type rideau (à une température d'environ 120 à 180 °C). L'application de l'HMPSA par buse à lèvre est généralement effectuée sur la couche protectrice, l'ensemble étant alors contrecollé sur la couche support (enduction par transfert). L'application de l'HMPSA par enduction de type rideau peut être directement réalisée sur la couche support, en fonction de la température d'enduction.

Le système multicouche obtenu se présente sous la forme d'un rectangle de très grande longueur, et est généralement conditionné par enroulement sous forme d'une large bobine ayant jusqu'à 2 m de largeur et 1 m de diamètre.

L'invention concerne également une étiquette auto-adhésive susceptible d'être obtenue par transformation du système multicouche décrit précédemment. Le procédé de transformation mis en oeuvre comprend généralement :
- une étape d'impression sur la couche support imprimable, puis
- une étape de découpe du système multicouche de manière à en réduire la largeur, et donc à le reconditionner sur une bobine de largeur réduite, puis
- une étape (qualifiée d'échenillage) d'obtention d'un système multicouche, conditionné sur la bobine de l'étape précédente, dans lequel la couche protectrice inchangée est liée à la seule partie de la couche support imprimée qui correspond à la forme et aux dimensions de l'étiquette auto-adhésive adaptées à son utilisation finale. Cette étape consiste donc en la découpe sélective, puis en l'élimination de la partie indésirable de la couche support et de la couche d'adhésif, ladite partie étant souvent appelée "squelette de l'étiquette".

Ce dernier système multicouche est mis en oeuvre sur les chaînes de conditionnement des articles à étiqueter au moyen de systèmes automatisés qui séparent les étiquettes auto-adhésives de la couche protectrice, et les fixent sur les articles à étiqueter.

L'invention a également pour objet un article revêtu de l'étiquette auto-adhésive telle que définie précédemment.

L'article étiqueté est de préférence un emballage ou récipient constitué de verre ou d'une matière plastique usuelle choisie parmi le PolyEthylène Téréphtalate (PET), le PolyChlorure de Vinyle (PVC), le PolyEthylène (PE) ou le PolyPropylène (PP). Une bouteille de verre est plus particulièrement préférée. Les bouteilles de verre concernées peuvent ou non avoir reçu au cours de leur fabrication un traitement d'enduction destiné à maintenir dans le temps leurs propriétés mécaniques et à les protéger contre les rayures. Un tel traitement conduit par exemple au dépôt à la surface du verre d'une couche d'oxyde métallique, éventuellement recouverte d'une couche supplémentaire de nature cireuse.

L'invention concerne enfin un procédé de recyclage d'un article étiqueté, comprenant une étape de décollement de l'étiquette par immersion de l'article étiqueté dans une solution aqueuse basique maintenue à une température comprise entre 60 et 100 °C, caractérisé en ce que l'article étiqueté est tel que défini précédemment.

Le décollement de l'étiquette par ce procédé aboutit avantageusement à sa séparation complète de l'article, sans laisser à la surface de ce dernier de résidu d'adhésif et sans que la composition adhésive ne contamine la solution aqueuse basique de lavage. Dans le cadre d'une mise en oeuvre industrielle du procédé, il en résulte une moindre pollution des eaux de lavage et une économie améliorée du procédé de recyclage, notamment au plan de la quantité d'eau consommée. Les étiquettes ainsi séparées des articles traités peuvent être rassemblées et évacuées du bain de lavage par des moyens mécaniques appropriés.

Le procédé objet de l'invention est de préférence mis en oeuvre à une température d'environ 80°C.

Le pouvoir adhésif de l'HMPSA selon l'invention est évalué par le test de pelage (ou peel) à 180°C sur plaque de verre tel que décrit dans la méthode de test FINAT n° 1, publiée dans le Manuel Technique FINAT 6ème édition, 2001. FINAT est la fédération internationale des fabricants et transformateurs d'étiquettes auto-adhésives. Le principe de ce test est le suivant. L'HMPSA est préalablement enduit à raison de 20 g/m² sur la face OPP d'une couche support constituée d'un film PET de 19 µm d'épaisseur qui est contrecollé sur un film OPP de 50 µm d'épaisseur au moyen d'une colle polyuréthanne bicomposant. Une éprouvette sous forme de bande rectangulaire (25 mm x 175 mm) est découpée dans le support auto-adhésif ainsi obtenu. Cette éprouvette est fixée sur un substrat constitué d'une plaque de verre. L'assemblage obtenu est laissé 20 mn à température ambiante. Il est alors introduit dans un appareil de traction capable d'effectuer le pelage ou décollement de la bande sous un angle de 180° et avec une vitesse de séparation de 300 mm par minute. L'appareil mesure la force requise pour décoller la bande dans ces conditions. Le résultat est exprimé en N/cm. Le peel à 180° sur plaque de verre des colles destinées à la fabrication d'étiquettes auto-adhésives est généralement supérieur à 2 N/cm, de préférence à 4 N/cm.

Le pouvoir collant immédiat ou tack de l'HMPSA selon l'invention est évalué par le test d'adhésion instantanée dit de la boucle, décrit dans la méthode de test FINAT n° 9. L'HMPSA est préalablement enduit à raison de 20 g/m² sur un film d'OPP de 50 µm d'épaisseur, de manière à obtenir une bande rectangulaire de 25 mm sur 175 mm. Les 2 extrémités de cette bande sont jointes de manière à former une boucle dont la couche d'adhésif est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque. Le pouvoir collant d'un PSA est généralement supérieur ou égal à 1 N/cm².

L'aptitude au décollement à chaud en milieu aqueux basique d'étiquettes enduites de l'HMPSA selon invention et préalablement fixées sur substrat de verre est évaluée par le test suivant.

On utilise des bouteilles de verre de diamètre 5 cm et de hauteur environ 20 cm réparties en 2 groupes en fonction de la nature du verre qui les constitue. Ce verre présente en effet 2 types de couche superficielle, selon le traitement d'enduction qui a été appliqué lors de la fabrication des bouteilles. Le 1^{er} type de couche comprend essentiellement de l'oxyde d'étain. Le 2^{ème} type comprend essentiellement une émulsion de cire de polyéthylène oxydée qui a été appliquée sur une couche d'oxyde d'étain. Le 2^{ème} type de couche est caractéristique de bouteilles de verre neuves. Le 1^{er} type est caractéristique de bouteilles de verre ayant déjà été immergées dans une solution aqueuse basique, durant au moins un cycle de nettoyage. Le 1^{er} groupe de bouteilles est désigné ci-après par "SnO", le 2^{ème} par le sigle "PE".

L'HMPSA à tester est enduit sur la même couche support et dans les mêmes conditions que dans le test de pelage à 180°. Une étiquette rectangulaire (de 7 cm sur 5 cm) est découpée dans le support auto-adhésif ainsi obtenu. Elle est fixée sur une bouteille de verre par simple pression, l'ensemble étant laissé 24 heures à température ambiante.

La bouteille de verre étiquetée est ensuite immergée dans un bain d'eau thermostaté à 80°C ayant un pH de 12.

On évalue visuellement après 60 s d'immersion de la bouteille le pourcentage de décollement de l'étiquette (ci-après "% décollement"), et ce pour des bouteilles de type "SnO" et de type "PE".

La quantité d'adhésif présent dans la solution aqueuse basique après immersion de la bouteille étiquetée et séparation de l'étiquette est mesurée de la façon suivante. Au cours de la mise en oeuvre du test précédent, on détermine le poids P1 de l'étiquette auto-adhésive avant sa fixation sur la bouteille de verre. Après une durée d'immersion de 20 minutes de la bouteille et de l'étiquette dans la solution aqueuse basique, l'étiquette qui est alors décollée de la bouteille est récupérée, séchée à poids constant P2. La différence de poids P1-P2, exprimée en pourcentage relativement à P1, correspond à la perte en HMPSA de l'étiquette auto-adhésive.

Les exemples suivants sont donnés à titre purement illustratif de l'invention et ne sauraient être interprétés de manière à en limiter la portée.

Les compositions figurant dans le tableau 1 suivant sont préparées par simple mélange à chaud à 180 °C des ingrédients indiqués. Outre ces ingrédients, ces compositions contiennent également 0,5 % d'Irganox^{®} 1010 et 0,5 % d'Irgafos^{®} 168. La teneur des autres ingrédients est indiquée dans le tableau 1.

Les résultats des tests effectués sont indiqués dans le tableau 2.

Pour tous ces exemples, durant la mise en oeuvre du test de décollement à chaud en milieu aqueux basique, on n'observe -après séparation de l'étiquette- aucune trace d'adhésif sur la surface des bouteilles. La perte en HMPSA de l'étiquette est de 0%, ce qui indique, pour chacun de ces exemples, que la solution aqueuse basique de lavage ne contient pas d'HMPSA.

| Ingrédient | **Tableau 1** Teneur en % | | | | | | | | | | |
|---|---|---|---|---|---|---|---|---|---|---|---|
| | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
| Kraton^{®} D1124 | 40 | 40 | - | 31 | 25 | 40 | 40 | 40 | - | - | - |
| Kraton^{®} D 1165 | - | - | - | - | - | - | - | - | - | 40 | 40 |
| Vector^{®} 4411 | - | - | 30 | - | - | - | - | - | - | - | - |
| Vector^{®} DPX 586 | - | - | 15 | - | - | - | - | - | 44 | - | - |
| Kraton^{®} G1726 | - | - | - | 12 | - | - | - | - | - | - | - |
| Europrène^{®} Sol T 166 | - | - | - | - | 15 | - | - | - | - | - | - |
| Sylvarez^{®} ZT 105 LT | 22 | 24 | 21 | 24 | 23 | 20 | 22 | 18 | 21 | 22 | - |
| Escorez^{®} 5600 | 20 | 23 | 23 | 21 | 24 | - | - | - | - | - | - |
| Escorez^{®} 5400 | - | - | - | - | - | - | - | - | - | - | 22 |
| Escorez^{®} 5615 | - | - | - | - | - | 20 | 20 | 19 | 20 | 20 | 20 |
| Sylvalite^{®} RE 100S | 5 | - | - | - | - | 5 | - | - | 4 | 5 | 5 |
| Radiacide^{®} 970 | 4 | - | 10 | - | 4 | - | - | 4 | - | - | - |
| Radiacide^{®} 980 | - | 4 | - | - | - | - | - | - | - | - | - |
| Radiacide^{®} 600 | - | - | - | - | - | 6 | 4 | - | - | - | - |
| Radiacide^{®} 208 | - | - | - | 3 | - | - | - | - | - | - | - |
| Sylvatal^{®} 20/25 | - | - | - | - | - | - | - | - | 4 | 4 | 4 |
| Foral^{®} AX | - | - | - | - | - | - | 5 | 10 | - | - | - |
| Plimol^{®} 352 | 8 | 8 | - | 3 | 8 | 8 | 8 | 8 | 6 | 8 | 8 |
| A-C^{®} 617 | - | - | - | 5 | - | - | - | - | - | - | - |

| Tests | **Tableau 2** Résultats | | | | | | | | | | |
|---|---|---|---|---|---|---|---|---|---|---|---|
| | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
| Peel 180° sur verre (N/cm) | 6 | 8 | 3 | 5 | 2 | 2 | 2 | 3 | 4 | 5 | 2 |
| Adhésion instantanée de la boucle (N/cm²) | 5 | 1 | 4 | 2 | 4 | 1 | 1 | 3 | 4 | 3 | 2 |
| % décollement PE | 100 | 90 | 90 | 80 | 100 | 80 | 90 | 80 | 80 | 100 | 100 |
| % décollement SnO | 100 | 100 | 80 | 100 | 100 | 100 | 100 | 100 | 100 | 100 | 100 |

## Revendications

1. Composition adhésive thermofusible sensible à la pression (HMPSA) comprenant :
- a) de 25 à 50 % d'un ou plusieurs copolymères blocs styréniques choisis dans le groupe comprenant les SIS, les SIBS, les SEBS, les SEPS, éventuellement mélangés avec une quantité d'un copolymère bloc styrénique SBS inférieure à 50 % sur la base du poids total de copolymères blocs styréniques ;
- b) de 35 à 75 % d'une ou plusieurs résines tackifiantes compatibles ayant une température de ramollissement comprise entre 80 et 150 °C et un indice d'acide inférieur à 20 ;
- c) entre 3 et 15 % d'un ou plusieurs acides carboxyliques dont la chaîne hydrocarbonée comprend de 6 à 54 atomes de carbone.

2. HMPSA selon la revendication 1, **caractérisé en ce que** la teneur en copolymère bloc styrénique peut aller de 35 à 50 %, et de préférence de 40 à 45 %.

3. HMPSA selon l'une des revendications 1 ou 2, **caractérisé en ce que** le ou les copolymères blocs styréniques sont choisis dans le groupe comprenant les SIS, les SEBS et les SEPS.

4. HMPSA selon l'une des revendications 1 à 3, **caractérisé en ce que** le ou les copolymères blocs styréniques sont des SIS.

5. HMPSA selon l'une des revendications 1 à 4, **caractérisé en ce que** les résines tackifiantes sont choisies parmi :
- (i) des colophanes d'origine naturelle ou chimiquement modifiées et leurs dérivés hydrogénés, deshydrogénés, dimérisés, polymérisés ou estérifiés par des monoalcools ou des polyols ;
- (ii) des résines obtenues par hydrogénation, polymérisation ou copolymérisation de mélanges d'hydrocarbures aliphatiques insaturés ayant environ 5, 9 ou 10 atomes de carbone issus de coupes pétrolières ;
- (iii) des résines terpéniques, éventuellement modifiées par action de phénols ;
- (iv) des copolymères à base de terpènes naturels.

6. HMPSA selon l'une des revendications 1 à 5, **caractérisé en ce que** la ou les résines tackifiantes ont une température de ramollissement comprise entre 95 et 120°C et un indice d'acide inférieur à 10.

7. HMPSA selon l'une des revendications 1 à 6, **caractérisé en ce que** l'indice d'acide des résines tackifiantes est sensiblement nul.

8. HMPSA selon l'une des revendications 1 à 7, **caractérisé en ce que** la teneur en résine tackifiante est comprise entre 40 et 55%.

9. HMPSA selon l'une des revendications 1 à 8, **caractérisé en ce que** les acides carboxyliques sont choisis parmi :
- (α) des acides gras monocarboxyliques, saturés ou insaturés, purs ou en mélanges ;
- (β) des mélanges d' acides gras polycarboxyliques, saturés ou insaturés, de type dimère ou trimère ;
- (γ) des mélanges d'acides monocarboxyliques polycycliques, saturés ou insaturés.

10. HMPSA selon l'une des revendications 1 à 9, **caractérisé en ce que** l'on utilise des mélanges d' acides gras monocarboxyliques (α) sous la forme de coupes issues de corps gras d'origine animale ou végétale.

11. HMPSA selon l'une des revendications 1 à 10, **caractérisé en ce qu'**il comprend en outre de 0,1 à 2 % d'un ou plusieurs stabilisants et jusqu'à 20 % d'un plastifiant.

12. Système multicouche comprenant :
- une couche d'adhésif constituée de la composition adhésive thermofusible sensible à la pression telle que définie dans l'une des revendications 1 à 11 ;
- une couche support imprimable adjacente à ladite couche d'adhésif, constituée de papier ou de film polymère à une ou plusieurs couches ;
- une couche protectrice adjacente à ladite couche d'adhésif.

13. Système multicouche selon la revendication 12, caractérisé en que la couche support imprimable est un film bi-couche OPP/PET dont la couche d'OPP est adjacente à la couche d'adhésif.

14. Etiquette auto-adhésive susceptible d'être obtenue par transformation du système multicouche tel que défini dans l'une des revendications 12 ou 13.

15. Article revêtu de l'étiquette auto-adhésive telle que définie dans la revendication 14.

16. Article selon la revendication 15, consistant en un emballage ou récipient constitué de verre ou d'une matière plastique, consistant de préférence en une bouteille de verre.

17. Procédé de recyclage d'un article étiqueté, comprenant une étape de décollement de l'étiquette par immersion de l'article étiqueté dans une solution aqueuse basique maintenue à une température comprise entre 60 et 100 °C, **caractérisé en ce que** l'article étiqueté est tel que défini dans l'une des revendications 15 ou 16.

## Patentansprüche

1. Schmelzhaftklebstoffzusammensetzung (HMPSA-Zusammensetzung), umfassend:
- a) 25 bis 50% eines oder mehrerer Styrolblockcopolymere, die aus der Gruppe umfassend SIS, SIBS, SEBS und SEPS ausgewählt sind, gegebenenfalls in Abmischung mit einer Menge eines SBS-Styrolblockcopolymers von weniger als 50%, bezogen auf das Gesamtgewicht der Styrolblockcopolymere;
- b) 35 bis 75% eines oder mehrerer verträglicher klebrigmachender Harze mit einer Erweichungstemperatur zwischen 80 und 150°C und einer Säurezahl von weniger als 20;
- c) zwischen 3 und 15% einer oder mehrerer Carbonsäuren mit 6 bis 54 Kohlenstoffatomen in der Kohlenwasserstoffkette.

2. HMPSA nach Anspruch 1, **dadurch gekennzeichnet, dass** der Gehalt an Styrolblockcopolymer 35 bis 50% und vorzugsweise 40 bis 45% betragen kann.

3. HMPSA nach Anspruch 1 oder 2, **dadurch gekennzeichnet, dass** das Styrolblockcopolymer bzw. die Styrolblockcopolymere aus der Gruppe umfassend SIS, SEBS und SEPS ausgewählt ist bzw. sind.

4. HMPSA nach einem der Ansprüche 1 bis 3, **dadurch gekennzeichnet, dass** es sich bei dem Styrolblockcopolymer bzw. den Styrolblockcopolymeren um SIS handelt.

5. HMPSA nach einem der Ansprüche 1 bis 4, **dadurch gekennzeichnet, dass** die klebrigmachenden Harze unter:
- (i) natürlichen oder chemisch modifizierten Kolophoniumharzen und hydrierten, dehydrierten, dimerisierten, polymerisierten oder mit Monoalkoholen oder Polyolen veresterten Derivaten davon;
- (ii) durch Hydrierung, Polymerisation oder Copolymerisation von Mischungen von ungesättigten aliphatischen Kohlenwasserstoffen mit ungefähr 5, 9 oder 10 Kohlenstoffatomen, die aus Erdölfraktionen stammen, erhaltenen Harzen;
- (iii) gegebenenfalls durch Einwirkung von Phenolen modifizierten Terpenharzen;
- (iv) Copolymeren auf Basis von natürlichen Terpenen
ausgewählt sind.

6. HMPSA nach einem der Ansprüche 1 bis 5, **dadurch gekennzeichnet, dass** das klebrigmachende Harz bzw. die klebrigmachenden Harze eine Erweichungstemperatur zwischen 95 und 120°C und eine Säurezahl von weniger als 10 aufweist bzw. aufweisen.

7. HMPSA nach einem der Ansprüche 1 bis 6, **dadurch gekennzeichnet, dass** die Säurezahl der klebrigmachenden Harze im Wesentlichen gleich null ist.

8. HMPSA nach einem der Ansprüche 1 bis 7, **dadurch gekennzeichnet, dass** der Gehalt an klebrigmachendem Harz zwischen 40 und 55% liegt.

9. HMPSA nach einem der Ansprüche 1 bis 8, **dadurch gekennzeichnet, dass** die Carbonsäuren unter:
- (α) gesättigten oder ungesättigten Fettsäuren mit einer Carboxylgruppe, rein oder als Mischungen;
- (β) Mischungen von gesättigten oder ungesättigten Fettsäuren mit mehreren Carboxylgruppen vom Dimer- oder Trimer-Typ;
- (γ) Mischungen von gesättigten oder ungesättigten polycyclischen Monocarbonsäuren
ausgewählt sind.

10. HMPSA nach einem der Ansprüche 1 bis 9, **dadurch gekennzeichnet, dass** man Mischungen von Fettsäuren mit einer Carboxylgruppe (α) in Form von Fraktionen, die von tierischen oder pflanzlichen Fettsubstanzen stammen, verwendet.

11. HMPSA nach einem der Ansprüche 1 bis 10, **dadurch gekennzeichnet, dass** er außerdem 0,1 bis 2% eines oder mehrerer Stabilisatoren und bis zu 20% eines Weichmachers umfasst.

12. Mehrschichtsystem, umfassend:
- eine Klebstoffschicht, bestehend aus der Schmelzhaftklebstoffzusammensetzung gemäß einem der Ansprüche 1 bis 11,
- einer bedruckbaren Trägerschicht, die der Klebstoffschicht benachbart ist und aus Papier oder Polymerfolie mit einer oder mehreren Schichten besteht;
- einer Schutzschicht, die der Klebstoffschicht benachbart ist.

13. Mehrschichtsystem nach Anspruch 12, **dadurch gekennzeichnet, dass** es sich bei der bedruckbaren Trägerschicht um eine OPP/PET-Zweischichtfolie handelt, deren OPP-Schicht der Klebstoffschicht benachbart ist.

14. Selbstklebeetikett, das durch Umwandlung des Mehrschichtsystems gemäß Anspruch 12 oder 13 erhältlich ist.

15. Artikel, der mit dem Selbstklebeetikett gemäß Anspruch 14 beschichtet ist.

16. Artikel nach Anspruch 15, bestehend aus einer Verpackung oder einem Behälter aus Glas oder Kunststoff und vorzugsweise aus einer Glasflasche.

17. Verfahren zur Rezyklierung eines etikettierten Artikels, bei dem man das Etikett durch Eintauchen des ettiketierten Artikels in eine bei einer Temperatur zwischen 60 und 100°C gehaltene basische wässrige Lösung ablöst, **dadurch gekennzeichnet, dass** der etikettierte Artikel wie in den Ansprüchen 15 oder 16 definiert ist.

## Claims

1. Hot-melt pressure-sensitive adhesive (HMPSA) composition comprising:
- a) 25 to 50% of one or more styrene block copolymers chosen from the group comprising SIS, SIBS, SEBS and SEPS block copolymers optionally blended with an amount of an SBS styrene block copolymer of less than 50% on the basis of the total weight of the styrene block copolymers;
- b) 35 to 75% of one or more compatible tackifying resins having a softening temperature of between 80 and 150°C and an acid number of less than 20; and
- c) between 3 and 15% of one or more carboxylic acids, the hydrocarbon chain of which comprises 6 to 54 carbon atoms.

2. HMPSA according to Claim 1, **characterized in that** the styrene block copolymer content may range from 35 to 50% and preferably from 40 to 45%.

3. HMPSA according to either of Claims 1 and 2, **characterized in that** the styrene block copolymer or copolymers are chosen from the group comprising SIS, SEBS and SEPS block copolymers.

4. HMPSA according to one of Claims 1 to 3, **characterized in that** the styrene block copolymer or copolymers are SIS block copolymers.

5. HMPSA according to one of Claims 1 to 4, **characterized in that** the tackifying resins are chosen from:
(i) natural or chemically modified colophony rosins and their hydrogenated, dehydrogenated, dimerized or polymerized derivatives or esterified by monoalcohols or polyols;
(ii) resins obtained by the hydrogenation, polymerization or copolymerization of mixtures of unsaturated aliphatic hydrocarbons having about 5, 9 or 10 carbon atoms derived from petroleum fractions;
(iii) terpene resins, optionally modified by the action of phenols; and
(iv) copolymers based on natural terpenes.

6. HMPSA according to one of Claims 1 to 5 , **characterized in that** the tackifying resin or resins have a softening temperature of between 95 and 120°C and an acid number of less than 10.

7. HMPSA according to one of Claims 1 to 6, **characterized in that** the acid number of the tackifying resins is substantially zero.

8. HMPSA according to one of Claims 1 to 7, **characterized in that** the tackifying resin content is between 40 and 55%.

9. HMPSA according to one of Claims 1 to 8, **characterized in that** the fatty acids are chosen from:
(α) saturated or unsaturated, monocarboxylic fatty acids, whether pure or as mixtures;
(β) mixtures of saturated or unsaturated, polycarboxylic fatty acids of the dimer or trimer type; and
(γ) mixtures of saturated or unsaturated, polycyclic monocarboxylic acids.

10. HMPSA according to one of Claims 1 to 9, **characterized in that** mixtures of monocarboxylic fatty acids (α) in the form of fractions derived from animal or vegetable fats are used.

11. HMPSA according to one of Claims 1 to 10, **characterized in that** it further includes 0.1 to 2% of one or more stabilizers and up to 20% of a plasticizer.

12. Multilayer system comprising:
- an adhesive layer consisting of the hot-melt pressure-sensitive adhesive composition as defined in one of Claims 1 to 11;
- a printable support layer adjacent said adhesive layer, consisting of paper or polymer film having one or more layers; and
- a protective layer adjacent said adhesive layer.

13. Multilayer system according to Claim 12, **characterized in that** the printable support layer is an OPP/PET bilayer film, the OPP layer of which is adjacent the adhesive layer.

14. Self-adhesive label that can be obtained by conversion of the multilayer system as defined in either of Claims 12 and 13.

15. Article coated with the self-adhesive label as defined in Claim 14.

16. Article according to Claim 15, consisting of a package or container made of glass or plastic, preferably a glass bottle.

17. Process for recycling a labeled article, comprising a step of debonding the label by immersing the labeled article in a basic aqueous solution maintained at a temperature of between 60 and 100°C, **characterized in that** the labeled article is as defined in either of Claims 15 and 16.
